(19) Europäisches Patentamt
European Patent Office
Office européen des brevets

(11) EP 2 404 949 A1

(12) **EUROPEAN PATENT APPLICATION**
published in accordance with Art. 153(4) EPC

(43) Date of publication:
**11.01.2012 Bulletin 2012/02**

(21) Application number: **10748858.7**

(22) Date of filing: **02.03.2010**

(51) Int Cl.:
***C08G 64/06*** *(2006.01)* ***G02B 1/04*** *(2006.01)*

(86) International application number:
**PCT/JP2010/053711**

(87) International publication number:
**WO 2010/101265 (10.09.2010 Gazette 2010/36)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **06.03.2009 JP 2009053462**

(71) Applicant: **Teijin Chemicals, Ltd.**
**Chiyoda-ku**
**Tokyo 100-0013 (JP)**

(72) Inventors:
- **NUNOME Kazunori**
  **Tokyo 100-0013 (JP)**
- **MATSUI Manabu**
  **Tokyo 100-0013 (JP)**
- **IMANAKA Yoshihiko**
  **Tokyo 100-0013 (JP)**

(74) Representative: **Beckmann, Claus**
**Kraus & Weisert**
**Patent- und Rechtsanwälte**
**Thomas-Wimmer-Ring 15**
**80539 München (DE)**

# (54) COPOLYCARBONATE AND OPTICAL LENS

(57) A copolycarbonate having a high refractive index, a small birefringence, high processability and excellent transparency and an optical lens formed from the copolycarbonate.

The copolycarbonate has a total content of a unit represented by the following formula (I) and a unit represented by the following formula (II) of not less than 80 mol% based on the total of all the recurring units, the molar ratio of the unit represented by the formula (I) to the unit represented by the formula (II) being in the range of 98:2 to 35:65.

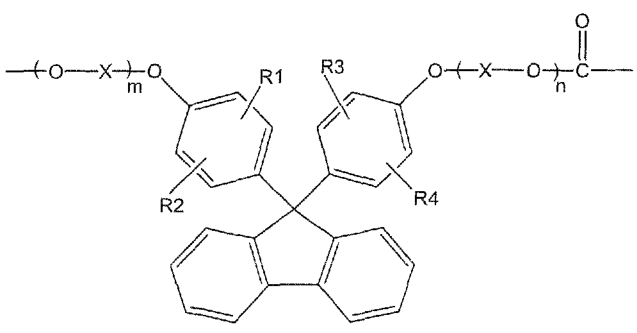

(I)

(wherein each of R1, R2, R3 and R4 is independently a hydrogen atom, alkyl group having 1 to 20 carbon atoms or the like. X is an alkylene group having 2 to 8 carbon atoms or the like. Each of m and n is independently an integer of 1 to 10.)

EP 2 404 949 A1

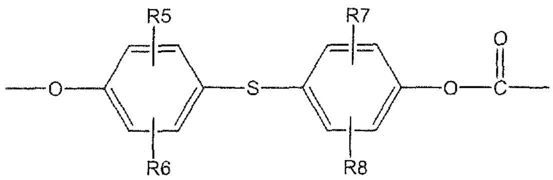

(I I)

(wherein each of R5, R6, R7 and R8 is independently a hydrogen atom, alkyl group having 1 to 20 carbon atoms or the like.)

## Description

TECHNICAL FIELD

The present invention relates to a copolycarbonate having a high refractive index and to an optical lens formed from the copolycarbonate.

BACKGROUND ART

Optical glass or an optical transparent resin is used as a material for optical elements for use in optics of various cameras such as cameras, film built-in cameras and video cameras. The optical glass is excellent in heat resistance, transparency, dimensional stability and chemical resistance, and many types of materials having various refractive indices and Abbe numbers are existent. However, they have problems to be solved, such as high material cost, low moldability and low productivity. To process it into an aspherical lens used for aberration correction in particular, extremely advanced techniques and high cost are required, which is a big obstacle to their practical use.

An optical lens made of an optical transparent resin has advantages that it can be mass-produced by injection molding and that the production of an aspherical lens is easy and is now used as a camera lens. Examples of the optical transparent resin include polycarbonates obtained from bisphenol A, polystyrene, poly-4-methylpentene, polymethyl methacrylate and amorphous polyolefins.

However, when the optical transparent resin is used as an optical lens, heat resistance, transparency, low water absorptivity, chemical resistance, light resistance and low birefringence are required for the resin in addition to refractive index and Abbe number, whereby its use is limited according to balance among the properties of the resin. For example, polystyrene has low heat resistance and large birefringence, poly-4-methylpentene has low heat resistance, polymethyl methacrylate has low heat resistance, and polycarbonates obtained from bisphenol A have large birefringence. Therefore, their uses are limited.

In general, when the refractive index of an optical material is high, lens elements having the same refractive index can have a surface with a small curvature, thereby making it possible to reduce the amount of aberration generated on this surface, the number of lenses, the eccentric sensitivity of each lens and the thickness of each lens so as to reduce the size and weight of a lens system. For example, when the focusing distance "f" is 30 mm, the curvature radius $R_1$ of a convex surface is 5 mm, the curvature radius $R_2$ of a concave surface is 4 mm and the refractive index "n" is 1.610, the thickness "d" of a lens is 0.24 mm and when the refractive index "n" is 1.640, the thickness "d" of the lens can be reduced to 0.10 mm.

The distance from the principal point of the lens to the focusing distance is represented by the following formula.

$$\frac{1}{f} = (n-1) \times \left( \frac{1}{R_1} - \frac{1}{R_2} \right) + \left( \frac{d(n-1)^2}{nR_1R_2} \right) \quad \cdots (a)$$

(f; focusing distance, n; refractive index of lens material, d; lens thickness, $R_1$; curvature radius of lens front surface, $R_2$; curvature radius of rear surface)

Therefore, the development of a resin for optical lenses having a high refractive index, low birefringence and good balance among physical properties has been widely conducted.

Out of optical transparent resins which have been used for optical lenses, resins having a high refractive index are a polycarbonate obtained from bisphenol A (nD = 1.586, vD = 29) and polystyrene (nD = 1.578, vD = 34). Since the polycarbonate obtained from bisphenol A in particular has a high refractive index, high heat resistance and excellent mechanical properties, studies on its optical lens application have been widely conducted. However, both the polycarbonate obtained from bisphenol A and the polystyrene have large birefringence.

There is proposed a polycarbonate for optical use which has a fluorene structure. For example, it is proposed as a substrate for optical materials such as optical disks (Patent Document 1). There is also proposed an optical lens made of a polycarbonate having a fluorene structure (Patent Document 2). However, this polycarbonate has a refractive index of about 1.61 which is not sufficiently high as an optical lens. There is also proposed a copolycarbonate containing units derived from fluorene and bisphenol A (Patent Document 3).

There is proposed a technique for improving the refractive index easily by blending (mixing or adding) a sulfur-containing compound with a fluorene-containing polyester (Patent Document 4). However, since a low-molecular weight component is added in the above technique, heat stability degrades and when these two components to be blended

together have low compatibility with each other, transparency degrades.

(Patent Document 1) JP-A 10-101786
(Patent Document 2) JP-A 2005-241962
(Patent Document 3) WO2007/142149
(Patent Document 4) JP-A 2005-187661

DISCLOSURE OF THE INVENTION

It is an object of the present invention to provide a copolycarbonate having a high refractive index, a small birefringence, high processability and excellent transparency. It is another object of the present invention to provide an optical lens formed from the copolycarbonate.

The inventors of the present invention have found that when a dihydroxy compound having a fluorene structure and a dihydroxy compound having a sulfide bond are copolymerized with each other, a copolycarbonate having a high refractive index, a small birefringence, high processability and excellent transparency is obtained and have accomplished the present invention.

That is, the present invention is a copolycarbonate having a total content of a unit represented by the following formula (I) and a unit represented by the following formula (II) of not less than 80 mol% based on the total of all the recurring units, the molar ratio of the unit represented by the formula (I) to the unit represented by the formula (II) being in the range of 98:2 to 35:65.

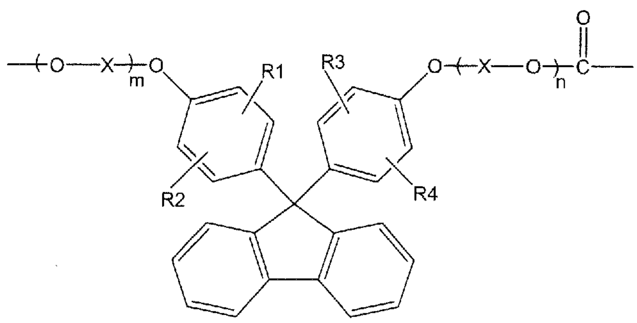

(I)

In the above formula (I), each of R1, R2, R3 and R4 is independently a hydrogen atom, alkyl group having 1 to 20 carbon atoms, alkoxyl group having 1 to 20 carbon atoms, cycloalkyl group having 5 to 20 carbon atoms, cycloalkoxyl group having 5 to 20 carbon atoms, aryl group having 6 to 20 carbon atoms or aryloxy group having 6 to 20 carbon atoms. X is an alkylene group having 2 to 8 carbon atoms, cycloalkylene group having 5 to 12 carbon atoms or arylene group having 6 to 20 carbon atoms. Each of "m" and "n" is independently an integer of 1 to 10.

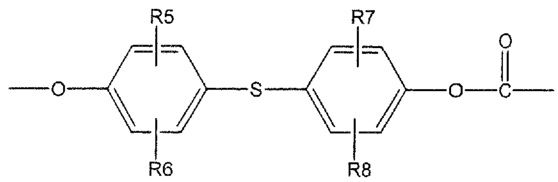

(II)

In the above formula (II), each of R5, R6, R7 and R8 is independently a hydrogen atom, alkyl group having 1 to 20 carbon atoms, alkoxyl group having 1 to 20 carbon atoms, cycloalkyl group having 5 to 20 carbon atoms, cycloalkoxyl group having 5 to 20 carbon atoms, aryl group having 6 to 20 carbon atoms or aryloxy group having 6 to 20 carbon atoms.

The present invention includes an optical lens formed from the copolycarbonate. The present invention also includes a method of producing an optical lens by injection molding the copolycarbonate.

BRIEF DESCRIPTION OF THE DRAWINGS

Fig. 1 shows a proton NMR of EX-PC1 of Example 1.

BEST MODE FOR CARRYING OUT THE INVENTION

(formula (I))

The copolycarbonate of the present invention comprises a unit represented by the following formula (I).

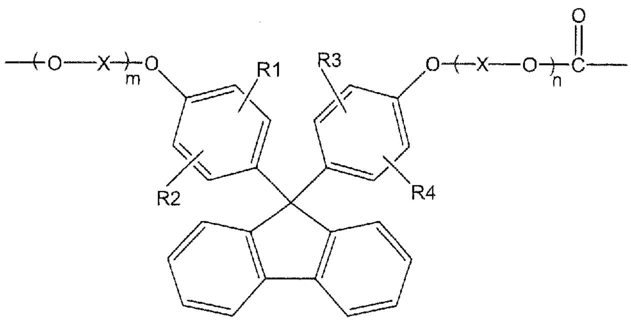

(I)

In the formula (I), each of R1, R2, R3 and R4 is independently a hydrogen atom, alkyl group having 1 to 20 carbon atoms, alkoxyl group having 1 to 20 carbon atoms, cycloalkyl group having 5 to 20 carbon atoms, cycloalkoxyl group having 5 to 20 carbon atoms, aryl group having 6 to 20 carbon atoms or aryloxy group having 6 to 20 carbon atoms.

Examples of the alkyl group having 1 to 20 carbon atoms include methyl group, ethyl group, propyl group, butyl group, pentyl group, hexyl group, octyl group, nonyl group, decyl group, undecyl group, dodecyl group, tridecyl group, tetradecyl group, pentadecyl group, hexadecyl group, heptadecyl group, octadecyl group, nonadecyl group and icosyl group.

Examples of the alkoxyl group having 1 to 20 carbon atoms include methoxy group, ethoxy group, propoxy group, butoxy group, pentyloxy group, hexyloxy group, octyloxy group, nonyloxy group, decyloxy group, undecyloxy group, dodecyloxy group, tridecyloxy group, tetradecyloxy group, pentadecyloxy group, hexadecyloxy group, heptadecyloxy group, octadecyloxy group, nonadecyloxy group and icosyloxy group.

Examples of the cycloalkyl group having 5 to 20 carbon atoms include cyclopentyl group, cyclohexyl group, cyclooctyl group, cyclononyl group, cyclodecyl group, cycloundecyl group, cyclododecyl group, cyclotridecyl group, cyclotetradecyl group, cyclopentadecyl group, cyclohexadecyl group, cycloheptadecyl group, cyclooctadecyl group, cyclononadecyl group and cycloicosyl group.

Examples of the cycloalkoxyl group having 5 to 20 carbon atoms include cyclopentyloxy group, cyclohexyloxy group, cyclooctyloxy group, cyclononyloxy group, cyclodecyloxy group, cycloundecyloxy group, cyclododecyloxy group, cyclotridecyloxy group, cyclotetradecyloxyl group, cyclopentadecyloxy group, cyclohexadecyloxy group, cycloheptadecyloxy group, cyclooctadecyloxy group, cyclononadecyloxy group and cycloicosyloxy group.

Examples of the aryl group having 6 to 20 carbon atoms include phenyl group and naphthyl group. Examples of the aryloxy group having 6 to 20 carbon atoms include phenyloxy group and naphthyloxy group.

X is an alkylene group having 2 to 8 carbon atoms, cycloalkylene group having 5 to 12 carbon atoms or arylene group having 6 to 20 carbon atoms. Examples of the alkylene group having 2 to 8 carbon atoms include ethylene group, propylene group, trimethylene group, butylene group, pentylene group, hexylene group and octylene group. Examples of the cycloalkylene group having 5 to 12 carbon atoms include cyclopentylene group, cyclohexylene group, cyclooctylene group, cyclononylene group, cyclodecylene group, cycloundecylene group and cyclododecylene group. Examples of the arylene group having 6 to 20 carbon atoms include phenylene group and naphthalenediyl group.

Each of "m" and "n" is independently an integer of 1 to 10, preferably 1 to 5, more preferably 1 to 2.

In the unit represented by the formula (I), preferably, each of R1, R2, R3 and R4 is a hydrogen atom, X is an ethylene group, "n" is 1, and "m" is 1.

(formula (II))

The copolycarbonate of the present invention comprises a unit represented by the following formula (II).

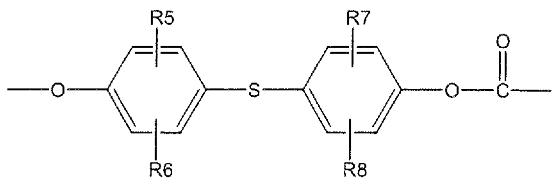

(II)

In the formula (II), each of R5, R6, R7 and R8 is independently a hydrogen atom, alkyl group having 1 to 20 carbon atoms, alkoxyl group having 1 to 20 carbon atoms, cycloalkyl group having 5 to 20 carbon atoms, cycloalkoxyl group having 5 to 20 carbon atoms, aryl group having 6 to 20 carbon atoms or aryloxy group having 6 to 20 carbon atoms.

Examples of the alkyl group having 1 to 20 carbon atoms include methyl group, ethyl group, propyl group, butyl group, pentyl group, hexyl group, octyl group, nonyl group, decyl group, undecyl group, dodecyl group, tridecyl group, tetradecyl group, pentadecyl group, hexadecyl group, heptadecyl group, octadecyl group, nonadecyl group and icosyl group.

Examples of the alkoxyl group having 1 to 20 carbon atoms include methoxy group, ethoxy group, propoxy group, butoxy group, pentyloxy group, hexyloxy group, octyloxy group, nonyloxy group, decyloxy group, undecyloxy group, dodecyloxy group, tridecyloxy group, tetradecyloxy group, pentadecyloxy group, hexadecyloxy group, heptadecyloxy group, octadecyloxy group, nonadecyloxy group and icosyloxy group.

Examples of the cycloalkyl group having 5 to 20 carbon atoms include cyclopentyl group, cyclohexyl group, cyclooctyl group, cyclononyl group, cyclodecyl group, cycloundecyl group, cyclododecyl group, cyclotridecyl group, cyclotetradecyl group, cyclopentadecyl group, cyclohexadecyl group, cycloheptadecyl group, cyclooctadecyl group, cyclononadecyl group and cycloicosyl group.

Examples of the cycloalkoxyl group having 5 to 20 carbon atoms include cyclopentyloxy group, cyclohexyloxy group, cyclooctyloxy group, cyclononyloxy group, cyclodecyloxy group, cycloundecyloxy group, cyclododecyloxy group, cyclotridecyloxy group, cyclotetradecyloxyl group, cyclopentadecyloxy group, cyclohexadecyloxy group, cycloheptadecyloxy group, cyclooctadecyloxy group, cyclononadecyloxy group and cycloicosyloxy group.

Examples of the aryl group having 6 to 20 carbon atoms include phenyl group and naphthyl group. Examples of the aryloxy group having 6 to 20 carbon atoms include phenyloxy group and naphthyloxy group.

In the unit represented by the formula (II), preferably, each of R5, R6, R7 and R8 is independently a hydrogen atom or methyl group.

(formula (III))

The copolycarbonate of the present invention may comprise a unit represented by the following formula (III). The content of the unit represented by the formula (III) is preferably not more than 20 mol%, more preferably not more than 10 mol%, much more preferably not more than 5 mol% based on the total of all the recurring units.

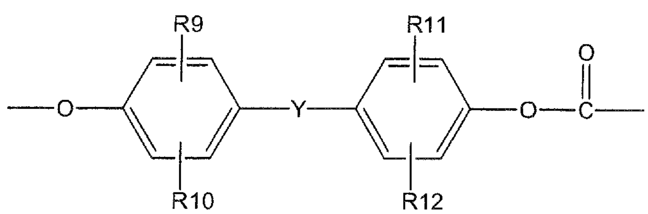

(III)

In the formula (III), each of R9, R10 , R11 and R12 is independently selected form the same substitutes as R5, R6, R7 and R8 of the formula (II), respectively.

Y is a single bond or a group represented by any one of the following formulas.

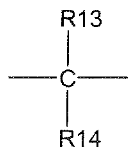 , 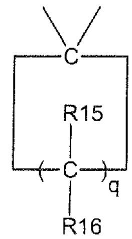 ,

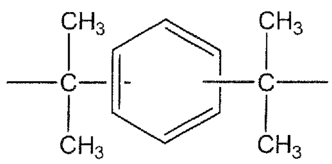 or 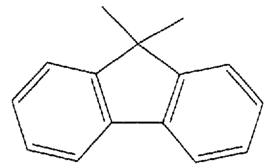

In the above formulas, each of R13 and R14 is independently an alkyl group having 1 to 20 carbon atoms, alkoxyl group having 1 to 20 carbon atoms, cycloalkyl group having 5 to 20 carbon atoms, cycloalkoxyl group having 5 to 20 carbon atoms, aryl group having 6 to 20 carbon atoms or aryloxy group having 6 to 20 carbon atoms.

Examples of the alkyl group having 1 to 20 carbon atoms include methyl group, ethyl group, propyl group, butyl group, pentyl group, hexyl group, octyl group, nonyl group, decyl group, undecyl group, dodecyl group, tridecyl group, tetradecyl group, pentadecyl group, hexadecyl group, heptadecyl group, octadecyl group, nonadecyl group and icosyl group.

Examples of the alkoxyl group having 1 to 20 carbon atoms include methoxy group, ethoxy group, propoxy group, butoxy group, pentyloxy group, hexyloxy group, octyloxy group, nonyloxy group, decyloxy group, undecyloxy group, dodecyloxy group, tridecyloxy group, tetradecyloxy group, pentadecyloxy group, hexadecyloxy group, heptadecyloxy group, octadecyloxy group, nonadecyloxy group and icosyloxy group.

Examples of the cycloalkyl group having 5 to 20 carbon atoms include cyclopentyl group, cyclohexyl group, cyclooctyl group, cyclononyl group, cyclodecyl group, cycloundecyl group, cyclododecyl group, cyclotridecyl group, cyclotetradecyl group, cyclopentadecyl group, cyclohexadecyl group, cycloheptadecyl group, cyclooctadecyl group, cyclononadecyl group and cycloicosyl group.

Examples of the cycloalkoxyl group having 5 to 20 carbon atoms include cyclopentyloxy group, cyclohexyloxy group, cyclooctyloxy group, cyclononyloxy group, cyclodecyloxy group, cycloundecyloxy group, cyclododecyloxy group, cyclotridecyloxy group, cyclotetradecyloxyl group, cyclopentadecyloxy group, cyclohexadecyloxy group, cycloheptadecyloxy group, cyclooctadecyloxy group, cyclononadecyloxy group and cycloicosyloxy group.

Examples of the aryl group having 6 to 20 carbon atoms include phenyl group and naphthyl group. Examples of the aryloxy group having 6 to 20 carbon atoms include phenyloxy group and naphthyloxy group.

Each of R15 and R16 is independently a hydrogen atom, alkyl group having 1 to 20 carbon atoms, cycloalkyl group having 1 to 20 carbon atoms, aryl group having 6 to 20 carbon atoms or aralkyl group having 6 to 20 carbon atoms. They may be different for each carbon atom constituting the cyclo ring. Examples of R15 and R16 are the same as substituents enumerated for R13 and R14, respectively. "q" is an integer of 3 to 11.

In the copolycarbonate of the present invention, the total content of the unit represented by the formula (I) and the unit represented by the formula (II) is not less than 80 mol%, preferably 90 to 100 mol%, more preferably 95 to 100 mol% based on the total of all the recurring units.

In the copolycarbonate of the present invention, the molar ratio of the unit represented by the formula (I) to the unit represented by the formula (II) is 98:2 to 35:65, preferably 95:5 to 35:65, more preferably 95: 5 to 40:60, much more preferably 95:5 to 50:50. The upper limit of the content of the unit represented by the formula (I) is preferably 98 mol%, more preferably 95 mol%, much more preferably 90 mol%, particularly preferably 85 mol%. The lower limit of the content of the unit represented by the formula (I) is preferably 35 mol%, more preferably 40 mol%, much more preferably 50 mol%.

When the copolycarbonate of the present invention consists of only the unit represented by the formula (I) and the unit represented by the formula (II) and the content of the unit represented by the formula (I) is higher than 98 mol%, Tg becomes higher than 160˚C with the result that injection molding conditions become narrow disadvantageously. When the content of the unit represented by the formula (I) is lower than 35 mol%, Tg becomes lower than 130˚C and the obtained copolycarbonate becomes unsatisfactory as a lens material disadvantageously.

(specific viscosity)

The specific viscosity measured at 20˚C of a solution prepared by dissolving 0.7 g of the copolycarbonate of the present invention in 100 ml of methylene chloride is preferably 0.12 to 0.55, more preferably 0.15 to 0.45. When the specific viscosity is lower than 0.12, a molded article becomes fragile and when the specific viscosity is higher than 0.55, melt viscosity and solution viscosity become high, thereby making it difficult to handle the copolycarbonate.

(glass transition temperature)

The copolycarbonate of the present invention has a glass transition temperature (Tg) measured at a temperature elevation rate of 20˚C/min of preferably 130 to 158˚C, more preferably 135 to 160˚C. When Tg is lower than 130˚C, heat resistance becomes unsatisfactory according to the use purpose of an optical part molded from the copolymer and when Tg is higher than 160 ˚C, melt viscosity becomes high, thereby making it difficult to handle the copolycarbonate so as to form a molded article thereof.

(refractive index)

The copolycarbonate of the present invention has a refractive index ($n_d$) at 25˚C and a wavelength of 589 nm of preferably 1.61 to 1.66, more preferably 1.62 to 1.66, much more preferably 1.63 to 1.66, particularly preferably 1.635 to 1.66.

The copolycarbonate of the present invention has a high refractive index ($n_d$) and is suitable for use as an optical lens material. For example, a copolymer of 9,9-bis(4-(2-hydroxyethoxy)phenyl)fluorene (BPEF) and bis(4-hydroxyphenyl)sulfide (TDP) has a refractive index ($n_d$) of 1.639 to 1.641 as shown in the table below.

| BPEF(mol%) | TDP(mol%) | Refractive index($n_d$) |
|---|---|---|
| 95 | 5 | 1.639 |
| 85 | 15 | 1.640 |
| 70 | 30 | 1.640 |
| 50 | 50 | 1.641 |

A conventional copolymer of BPEF and bisphenol A (BPA) has a refractive index ($N_d$) of 1.615 to 1.637 as shown in the table below.

| BPEF(mol%) | TDP(mol%) | Refractive index($n_d$) |
|---|---|---|
| 95 | 5 | 1.637 |
| 85 | 15 | 1.632 |
| 70 | 30 | 1.625 |
| 50 | 50 | 1.615 |

Preferably, the copolycarbonate of the present invention has a refractive index of 1. 61 to 1.66 and a glass transition temperature of 130 to 160˚C. The refractive index of a 0.1 mm-thick molded plate was measured at 25˚C and a wavelength of 589 nm by using the DRM2 Abbe refractometer of ATAGO Co., Ltd. and 1-bromonaphthalene as an intermediate liquid. The glass transition point of a sample obtained by pelletizing a copolycarbonate obtained after the end of polymerization was measured with 910 DSC of Du Pont.

($\Delta$n)

The copolycarbonate of the present invention has an orientation birefringence ($\Delta$n) as a measure of birefringence of preferably 0 to 10 nm, more preferably 0 to 5 nm, much more preferably 0 to 1 nm.

The orientation birefringence ($\Delta$n) is obtained from the following formula by cutting a 100 $\mu$m-thick cast film 7 cm in the casting direction (longitudinal direction) and 1.5 cm in a direction (width direction) orthogonal to the casting direction, sandwiching both ends of the obtained film in the longitudinal direction with chucks (chuck interval of 4.5 cm), stretching the film to 2 times in the casting direction at a temperature of (Tg of copolycarbonate + 10) ˚C and measuring its phase difference (Re) at 589 nm with the Ellipsometer M-220 of JASCO Corporation.

$\Delta n = Re/d$

$\Delta n$: orientation birefringence
Re: phase difference
d: thickness

(phase difference)

The phase difference as a measure of birefringence of the copolycarbonate of the present invention is preferably 0 to 130 nm, more preferably 0 to 50 nm, much more preferably 0 to 30 nm. The phase difference of a 1 mm-thick molded piece is measured with the KOBRA-CCD of Oj i Scientific Instruments Co., Ltd.

(total light transmittance)

The total light transmittance of the copolycarbonate of the present invention is preferably 80 to 100 %, more preferably 85 to 100 %, much more preferably 87 to 100 %. The total light transmittance is obtained by measuring a 1 mm-thick molded piece with the MDH-300A of Nippon Denshoku Industries Co., Ltd.

(5% weight loss temperature)

Preferably, the copolycarbonate of the present invention has a 5 % weight loss temperature measured at a temperature elevation rate of 20˚C/min of 350˚C or higher as an index of heat stability. The 5 % weight loss temperature is more preferably 400˚C or higher. When the 5 % weight loss temperature is lower than 350˚C, thermal decomposition becomes intense at the time of molding and it is difficult to obtain a satisfactory molded article disadvantageously.

(production of copolycarbonate)

The copolycarbonate of the present invention can be produced by using a dihydroxy compound represented by the following formula (1) and a dihydroxy compound represented by the following formula (2) in a total amount of not less than 80 mol% based on the total of all the dihydroxy compounds, the molar ratio of the compound represented by the formula (1) to the compound represented by the formula (2) being 98:2 to 35:65.

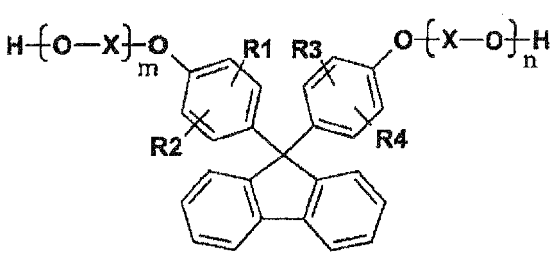

(1)

In the formula (1), each of R1, R2, R3, R4, X, m and n is defined in the above formula (I).

(dihydroxy compound represented by the formula (1))

Examples of the dihydroxy compound represented by the formula (1) include
9,9-bis(4-(2-hydroxyethoxy)phenyl)fluorene,
9,9-bis(4-(2-hydroxyethoxy)-3-methylphenyl)fluorene,
9,9-bis(4-(2-hydroxyethoxy-3,5-dimethylphenyl)fluorene,
9,9-bis(4-(2-hydroxyethoxy)-3-tert-butylphenyl)fluorene,
9,9-bis(4-(2-hydroxyethoxy)-3-isopropylphenyl)fluorene,
9,9-bis(4-(2-hydroxyethoxy)-3-cyclohexylphenyl)fluorene
and 9,9-bis(4-(2-hydroxyethoxy)-3-phenylphenyl)fluorene.
Out of these, 9,9-bis(4-(2-hydroxyethoxy)phenyl)fluorene is particularly preferred. They may be used alone or in combination of two or more.

(dihydroxy compound represented by the formula (2))

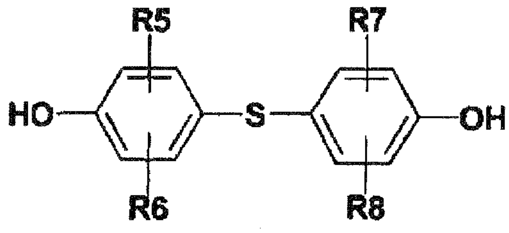

(2)

In the formula (2), R5, R6, R7 and R8 are as defined in the above formula (II).

The dihydroxy compound represented by the formula (2) may be a sulfur-containing- dihydroxy component, particularly preferably bis(4-hydroxyphenyl)sulfide or bis(4-hydroxy-3-methylphenyl)sulfide. They may be used alone or in combination of two or more.

The molar ratio of the dihydroxy compound represented by the formula (1) to the dihydroxy compound represented by the formula (2) is 98:2 to 35:65, preferably 95:5 to 35:65, more preferably 95:5 to 40:60, much more preferably 95:5 to 50:50.

(another dihydroxy compound)

In the present invention, another dihydroxy compound copolymerizable with the compounds represented by the formulas (1) and (2) may be added as a dihydroxy compound. The amount of this dihydroxy compound is preferably not more than 20 mol%, more preferably not more than 10 mol%, much more preferably not more than 5 mol% of the total of all the dihydroxy compounds.

Examples of the above dihydroxy compound include
hydroquinone, resorcinol, 4,4'-biphenol,
1,1-bis(4-hydroxyphenyl)ethane (bisphenol E),
2,2-bis(4-hydroxyphenyl)propane (bisphenol A),
2,2-bis(4-hydroxy-3-methylphenyl)propane (bisphenol C),
2,2-bis(4-hydroxyphenyl)butane,
1,1-bis(4-hydroxyphenyl)-1-phenylethane,
1,1-bis(4-hydroxyphenyl)cyclohexane (bisphenol Z),
1,1-bis(4-hydroxyphenyl)-3,3,5-trimethylcyclohexane,
2,2-bis(4-hydroxyphenyl)pentane,
4,4'-(p-phenylenediisopropylidene)diphenol,
a,a'-bis(4-hydroxyphenyl)-m-diisopropylbenzene (bisphenol M), 1,1-bis(4-hydroxyphenyl)-4-isopropylcyclohexane,
9,9-bis(4-hydroxyphenyl)fluorene,
9,9-bis(3-methyl-4-hydroxyphenyl)fluorene and
9,9-bis(3-ethyl-4-hydroxyphenyl)fluorene. Out of these,
9,9-bis(3-methyl-4-hydroxyphenyl)fluorene is particularly preferred.

A compound represented by the following formula (3) is given as another dihydroxy compound.

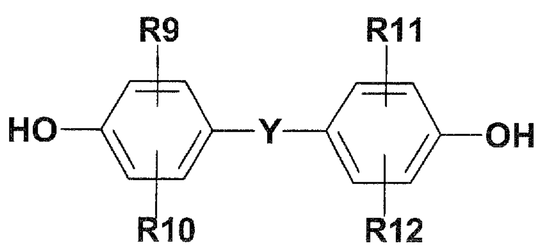

(3)

In the above formula, Y, R9, R10, R11 and R12 are as defined in the above formula (III).

The copolycarbonate of the present invention can be produced by reacting the dihydroxy compounds with a carbonate precursor such as phosgene or a diester carbonate.

When phosgene is used as the carbonate precursor, the reaction is generally carried out in the presence of an acid binder and a solvent. Examples of the acid binder include amine compounds such as pyridine. Examples of the solvent include halogenated hydrocarbons such as methylene chloride and chlorobenzene. The reaction temperature is generally 0 to 40˚C, and the reaction time is several minutes to 5 hours.

In a transesterification reaction in which a diester carbonate is used as the carbonate precursor, two or more dihydroxy compounds are reacted with the diester carbonate in the presence of a basic compound catalyst, a transesterification catalyst or a mixed catalyst of these two by known melt polycondensation. Examples of the diester carbonate include diphenyl carbonate, ditolyl carbonate, bis(chlorophenyl)carbonate, m-cresy carbonate, dimethyl carbonate, diethyl carbonate, dibutyl carbonate and dicyclohexyl carbonate. Out of these, diphenyl carbonate is particularly preferred. The diester carbonate is used in an amount of preferably 0.97 to 1.20 moles, more preferably 0.98 to 1.10 moles based on 1 mole of a diol component.

The basic compound catalyst is selected from an alkali metal compound, an alkali earth metal compound and a nitrogen-containing compound. Examples of the compounds include organic acid salts, inorganic salts, oxides, hydroxides, hydrides and alkoxides of an alkali metal compound or an alkali earth metal compound, or quaternary ammonium hydroxides and salts and amines thereof. They may be used alone or in combination.

The alkali metal compound used in the present invention is selected from an organic acid salt, inorganic salt, oxide, hydroxide, hydride and alkoxide of an alkali metal. Specific examples thereof include sodium hydroxide, potassium hydroxide, cesium hydroxide, lithium hydroxide, sodium hydrogen carbonate, sodium carbonate, potassium carbonate, cesium carbonate, lithium carbonate, sodium acetate, potassium acetate, cesium acetate, lithium acetate, sodium stearate, potassium stearate, cesium stearate, lithium stearate, sodium borohydride, sodium tetraphenylborate, sodium benzoate, potassium benzoate, cesium benzoate, lithium benzoate, disodium hydrogen phosphate, dipotassium hydrogen phosphate, dilithium hydrogen phosphate, disodium phenylphosphate, disodium salts, dipotassium salts, dicesium salts and dilithium salts of bisphenol A, and sodium salts, potassium salts, cesium salts and lithium salts of a phenol.

The alkali earth metal compound is selected from an organic acid salt, inorganic salt, oxide, hydroxide, hydride and alkoxide of an alkali earth metal compound. Specific examples thereof include magnesium hydroxide, calcium hydroxide, strontium hydroxide, barium hydroxide, magnesium hydrogen carbonate, calcium hydrogen carbonate, strontium hydrogen carbonate, barium hydrogen carbonate, magnesium carbonate, calcium carbonate, strontium carbonate, barium carbonate, magnesium acetate, calcium acetate, strontium acetate, barium acetate, magnesium stearate, calcium stearate, calcium benzoate and magnesium phenylphosphate.

The nitrogen-containing compound is selected from a quaternary ammonium hydroxide and a salt and an amine thereof. Specific examples thereof include quaternary ammonium hydroxides having an alkyl group or an aryl group such as tetramethylammonium hydroxide, tetraethylammonium hydroxide, tetrapropylammonium hydroxide, tetrabutylammonium hydroxide and trimethylbenzylammonium hydroxide, tertiary amines such as triethylamine, dimethylbenzylamine and triphenylamine, secondary amines such as diethylamine and dibutylamine, primary amines such as propylamine and butylamine, imidazoles such as 2-methylimidazole, 2-phenylimidazole and benzimidazole, and bases and basic salts such as ammonia, tetramethylammonium borohydride, tetrabutylammonium borohydride, tetrabutylammonium tetraphenylborate and tetraphenylammonium tetraphenylborate.

The transesterification catalyst is a salt of zinc, tin, zirconium or lead, and they may be used alone or in combination.

Specific examples of the transesterification catalyst include zinc acetate, zinc benzoate, zinc 2-ethylhexanoate, tin chloride (II), tin chloride (IV), tin acetate (II), tin acetate (IV), dibutyltin dilaurate, dibutyltin oxide, dibutyltin dimethoxide, zirconium acetylacetonato, zirconium oxyacetate, zirconium tetrabutoxide, lead acetate (II) and lead acetate (IV).

The catalyst is used in an amount of $10^{-9}$ to $10^{-3}$ mole, preferably $10^{-7}$ to $10^{-4}$ mole based on 1 mole of the total of all the dihydroxy compounds.

The melt polycondensation in the present invention is carried out under heating by using the above raw materials and the catalysts while a by-product is removed by a transesterification reaction under normal pressure or reduced pressure. The reaction is generally carried out in two or more stages.

Stated more specifically, the first-stage reaction is carried out at 120 to 260˚C, preferably 180 to 240˚C for 0.1 to 5 hours, preferably 0.5 to 3 hours. Then, the reaction temperature is raised while the degree of vacuum in the reaction system is increased to carry out a reaction between the dihydroxy compounds and the diester carbonate, and a polycondensation reaction is carried out under a reduced pressure of not more than 1 mmHg at a temperature of 200 to 350˚C for 0.05 to 2 hours in the end. This reaction may be carried out in a continuous matter or batch manner. The reactor used for carrying out the above reaction may be a vertical reactor equipped with an anchor-like stirring blade, max blend stirring blade or helical ribbon stirring blade, a horizontal reactor equipped with a puddle blade, lattice blade or spectacle blade, or an extruder equipped with a screw, and a combination of reactors are preferably used in consideration of the viscosity of a polymer.

It is preferred that the catalysts should be removed or deactivated so that the copolycarbonate of the present invention retains heat stability and hydrolysis stability after the end of the polymerization reaction. In general, the deactivation of the catalysts is preferably carried out by adding a conventionally known acid substance. Examples of the substance include esters such as butyl benzoate, aromatic sulfonic acids such as p-toluenesulfonic acid, aromatic sulfonates such as butyl p-toluenesulfonate and hexyl p-toluenesulfonate, phosphoric acids such as phosphorous acid, phosphoric acid and phosphonic acid, phosphites such as triphenyl phosphite, monophenyl phosphite, diphenyl phosphite, diethyl phosphite, di-n-propyl phosphite, di-n-butyl phosphite, di-n-hexyl phosphite, dioctyl phosphite and monooctyl phosphite, phosphates such as triphenyl phosphate, diphenyl phosphate, monophenyl phosphate dibutyl phosphate, dioctyl phosphate and monooctyl phosphate, phosphonic acids such as diphenylphosphonic acid, dioctylphosphonic acid and dibutylphosphonic acid, phosphonates such as diethyl phenylphosphonate, phosphines such as triphenylphosphine and bis (diphenylphosphino) ethane, boric acids such as boric acid and phenylboric acid, and aromatic sulfonates such as tetrabutylphosphonium dodecylbezenenesulfonate. Organic halides such as stearic acid chloride, benzoyl chloride and p-toluenesulfonic acid chloride, alkyl sulfuric acids such as dimethylsulfuric acid, and organic halides such as benzyl chloride are preferably used.

The deactivator is used in an amount that is 0.01 to 50 times, preferably 0.3 to 20 times the molar amount of the catalyst. When the amount of the deactivator is less than 0.01 time the molar amount of the catalyst, the deactivation effect becomes insufficient disadvantageously. When the amount is more than 50 times the molar amount of the catalyst, heat resistance degrades and a molded article is readily colored disadvantageously.

After the deactivation of the catalyst, the step of removing a low-boiling point compound contained in the polymer by volatilization at a pressure of 0.1 to 1 mmHg and a temperature of 200 to 350˚C may be provided. To this end, a horizontal reactor equipped with a stirring blade having excellent surface renewal ability such as puddle blade, lattice blade or spectacle blade, or a thin film evaporator is preferably used.

(optical lens)

The optical lens formed from the copolycarbonate of the present invention is molded by any means such as injection molding, compression molding or injection compression molding.

Various additives may be used to provide various properties to the optical lens formed from the copolycarbonate of the present invention as long as the object of the present invention is not impaired. The additives include a release agent, a heat stabilizer, an ultraviolet absorbent, a bluing agent, an antistatic agent, a flame retardant, a heat ray blocking agent, a fluorescent dye (including a fluorescent brightener), a pigment, a light diffuser, a reinforcing filler, and other resins and elastomers.

(release agent)

The release agent preferably comprises an ester of an alcohol and a fatty acid in an amount of not less than 90 wt%. The ester of an alcohol and a fatty acid is, for example, an ester of a monohydric alcohol and a fatty acid and/ or a partial ester or whole ester of a polyhydric alcohol and a fatty acid. The ester of a monohydric alcohol and a fatty acid is preferably an ester of a monohydric alcohol having 1 to 20 carbon atoms and a saturated fatty acid having 10 to 30 carbon atoms. The partial ester or whole ester of a polyhydric alcohol and a fatty acid is preferably a partial ester or whole ester of a polyhydric alcohol having 1 to 25 carbon atoms and a saturated fatty acid having 10 to 30 carbon atoms.

Examples of the ester of a monohydric alcohol and a saturated fatty acid include stearyl stearate, palmityl palmitate, butyl stearate, methyl laurate and isopropyl palmitate. Out of these, stearyl stearate is particularly preferred.

Examples of the partial ester or whole ester of a polyhydric alcohol and a saturated fatty acid include monoglyceride stearate, diglyceride stearate, triglyceride stearate, monosorbitate stearate, monoglyceride behenate, pentaerythritol monostearate, pentaerythritol tetrastearate, pentaerythritol tetrapelargonate, propylene glycol monostearate, biphenyl biphenate, sorbitan monostearate, 2-ethylhexyl stearate and a partial or whole ester of a dipentaerythritol such as dipentaerythritol hexastearate. Out of these esters, monoglyceride stearate, triglyceride stearate, pentaerythritol tetrastearate, and a mixture of triglyceride stearate and stearyl stearate are preferably used.

The content of the ester in the release agent is preferably not less than 90 wt%, more preferably not less than 95 wt% based on 100 wt% of the release agent.

The content of the release agent in the copolycarbonate is preferably 0. 005 to 2.0 parts by weight, more preferably 0.01 to 0.6 part by weight, much more preferably 0. 02 to 0.5 part by weight based on 100 parts by weight of the copolycarbonate.

(heat stabilizer)

The heat stabilizer is selected from a phosphorus-based heat stabilizer, a sulfur-based heat stabilizer and a

hindered phenol-based heat stabilizer.

The phosphorus-based heat stabilizer is selected from phosphorous acid, phosphoric acid, phosphonous acid, phosphonic acid and esters thereof. Specific examples thereof include triphenyl phosphite, tris(nonylphenyl)phosphite, tris(2,4-di-tert-butylphenyl)phosphite, tris(2,6-di-tert-butylphenyl)phosphite, tridecyl phosphite, trioctyl phosphite, trioctadecyl phosphite, didecylmonophenyl phosphite, dioctylmonophenyl phosphite, diisopropylmonophenyl phosphite, monobutyldiphenyl phosphite, monodecyldiphenyl phosphite, monooctyldiphenyl phosphite, bis(2,6-di-tert-butyl-4-methylphenyl)pentaerythritol diphosphite, 2,2-methylenebis(4,6-di-tert-butylphenyl)octyl phosphite, bis(nonylphenyl)pentaerythritol diphosphite, bis(2,4-di-tert-butylphenyl)pentaerythritol diphosphite, distearyl pentaerythritol diphosphite, tributyl phosphate, triethyl phosphate, trimethyl phosphate, triphenyl phosphate, diphenylmonoorthoxenyl phosphate, dibutyl phosphate, dioctyl phosphate, diisopropyl phosphate, dimethyl benzenephosphonate, diethyl benzenephosphonate, dipropyl benzenephosphonate, tetrakis(2,4-di-tert-butylphenyl)-4,4'-biphenylene diphosphonite, tetrakis(2,4-di-tert-butylphenyl)-4,3'-biphenylene diphosphonite, tetrakis(2,4-di-tert-butylphenyl)-3,3'-biphenylene diphosphonite, bis(2,4-di-tert-butylphenyl)-4-phenyl-phenyl phosphonite and bis(2,4-di-tert-butylphenyl)-3-phenyl-phenyl phosphonite. Out of these, tris(2,4-di-tert-butylphenyl)phosphite, tris(2,6-di-tert-butylphenyl)phosphite, tetrakis(2,4-di-tert-butylphenyl)-4,4'-biphenylene diphosphonite, tetrakis(2,4-di-tert-butylphenyl)-4,3'-biphenylene diphosphonite, tetrakis(2,4-di-tert-butylphenyl)-3,3'-biphenylene diphosphonite, bis(2,4-di-tert-butylphenyl)-4-phenyl-phenyl phosphonite and bis(2,4-di-tert-butylphenyl)-3-phenyl-phenyl phosphonite are preferred.
Tetrakis(2,4-di-tert-butylphenyl)-4,4'-biphenylene diphosphonite is particularly preferred.

The content of the phosphorus-based heat stabilizer in the copolycarbonate is preferably 0.001 to 0.2 part by weight based on 100 parts by weight of the copolycarbonate.

Examples of the sulfur-based heat stabilizer include pentaerythritol-tetrakis(3-laurylthiopropionate), pentaerythritol-tetrakis(3-myristylthiopropionate), pentaerythritol-tetrakis(3-stearylthiopropionate), dilauryl-3,3'-thiodipropionate, dimyristyl-3,3'-thiodipropionate and distearyl-3,3'-thiodipropionate. Out of these, pentaerythritol-tetrakis(3-laurylthiopropionate), pentaerythritol-tetrakis(3-myristylthiopropionate), dilauryl-3,3'-thiodipropionate and dimyristyl-3,3'-thiodipropionate are preferred.
Pentaerythritol-tetrakis(3-laurylthiopropionate) is particularly preferred. The thioether-based compound is commercially available from Sumitomo Chemical Co., Ltd. under the trade names of Sumilizer TP-D and Sumilizer TPM and can be easily used.

The content of the sulfur-based heat stabilizer in the copolycarbonate is preferably 0.001 to 0.2 part by weight based on 100 parts by weight of the copolycarbonate.

Examples of the hindered phenol-based heat stabilizer include triethylene glycol-bis[3-(3-tert-butyl-5-methyl-4-hydroxyphenyl) propionate], 1,6-hexanediol-bis[3-(3,5-di-tert-butyl-4-hydroxyphenyl) propionate], pentaerythritol-tetrakis[3-(3,5-di-tert-butyl-4-hydroxyphenyl)propionate], octadecyl-3-(3,5-di-tert-butyl-4-hydroxyphenyl) propionate, 1,3,5-trimethyl-2,4,6-tris(3,5-di-tert-butyl-4-hydroxybenzyl)benzene, N,N-hexamethylenebis(3,5-di-tert-butyl-4-hydroxyhydrocinnamide), 3,5-di-tert-butyl-4-hydroxy-benzylphosphonate-diethyl ester, tris(3,5-di-tert-butyl-4-hydroxybenzyl)isocyanurate and 3,9-bis{1,1-dimethyl-2-[β-(3-tert-butyl-4-hydroxy-5-methylphenyl)propionyloxy]ethyl}-2,4,8,10-tetraoxaspiro(5,5)undecane. Out of these, octadecyl-3-(3,5-di-tert-butyl-4-hydroxyphenyl) propionate is particularly preferred.

The content of the hindered phenol-based heat stabilizer in the copolycarbonate is preferably 0.001 to 0.3 part by weight based on 100 parts by weight of the copolycarbonate.

(ultraviolet absorbent)

The ultraviolet absorbent is preferably at least one ultraviolet absorbent selected from the group consisting of a benzotriazole-based ultraviolet absorbent, a benzophenone-based ultraviolet absorbent, a triazine-based ultraviolet absorbent, a cyclic iminoester-based ultraviolet absorbent and a cyanoacrylate-based ultraviolet absorbent.

Examples of the benzotriazole-based ultraviolet absorbent include 2-(2-hydroxy-5-methylphenyl)benzotriazole, 2-(2-hydroxy-5-tert-octylphenyl)benzotriazole, 2-(2-hydroxy-3,5-dicumylphenyl)phenylbenzotriazole, 2-(2-hydroxy-3-tert-butyl-5-methylphenyl)-5-chlorobenzotriazole,

2,2'-methylenebis[4-(1,1,3,3-tetramethylbutyl)-6-(2N-benzotriazol-2-yl)phenol], 2-(2-hydroxy-3,5-di-tert-butylphenyl)benzotriazole, 2-(2-hydroxy-3,5-di-tert-butylphenyl)-5-chlorobenzotriazole, 2-(2-hydroxy-3,5-di-tert-amylphenyl)benzotriazole, 2-(2-hydroxy-5-tert-octylphenyl)benzotriazole, 2-(2-hydroxy-5-tert-butylphenyl)benzotriazole, 2-(2-hydroxy-4-octoxyphenyl)benzotriazole, 2,2'-methylenebis(4-cumyl-6-benzotriazolephenyl), 2,2'-p-phenylenebis(1,3-benzoxazin-4-one) and 2-[2-hydroxy-3-(3,4,5,6-tetrahydrophthalimidemethyl)-5-methylphenyl]benzotriazole. They may be used alone or in combination of two or more.

2-(2-hydroxy-5-methylphenyl)benzotriazole, 2-(2-hydroxy-5-tert-octylphenyl)benzotriazole, 2-(2-hydroxy-3,5-dicumylphenyl)phenylbenzotriazole, 2-(2-hydroxy-3-tert-butyl-5-methylphenyl)-5-chlorobenzotriazole, 2,2'-methylenebis[4-(1,1,3,3-tetramethylbutyl)-6-(2H-benzotriazol-2-yl)phenol] and 2-[2-hydroxy-3-(3,4,5,6-tetrahydrophthalimidemethyl)-5-methylphenyl]benzotriazole are preferred. 2-(2-hydroxy-5-tert-octylphenyl)benzotriazole and 2,2'-methylenebis[4-(1,1,3,3-tetramethylbutyl)-6-(2H-benzotriazol-2-yl) phenol] are more preferred.

Examples of the benzophenone-based ultraviolet absorbent include 2,4-dihydroxybenzophenone, 2-hydroxy-4-methoxybenzophenone, 2-hydroxy-4-octoxybenzophenone, 2-hydroxy-4-benzyloxybenzophenone, 2-hydroxy-4-methoxy-5-sulfoxybenzophenone, 2-hydroxy-4-methoxybenzophenone-5-sulfonic acid trihydrate benzophenone, 2,2'-dihydroxy-4-methoxybenzophenone, 2,2',4,4'-tetrahydroxybenzophenone, 2,2'-dihydroxy-4,4'-dimethoxybenzophenone, 2,2'-dihydroxy-4,4'-dimethoxy-5-sodiumsulfoxy benzophenone, bis(5-benzoyl-4-hydroxy-2-methoxyphenyl)methane, 2-hydroxy-4-n-dodecyloxybenzophonone and 2-hydroxy-4-methoxy-2'-carboxybenzophenone. Examples of the triazine-based ultraviolet absorbent include 2-(4,6-diphenyl-1,3,5-triazin-2-yl)-5-[(hexyl)oxy]-phenol, and 2-(4,6-bis(2,4-dimethylphenyl)-1,3,5-triazin-2-yl)-5-[(octyl)oxy]-phenol. Examples of the cyclic iminoester-based ultraviolet absorbent include 2,2'-bis(3,1-benzoxazin-4-one), 2,2'-p-phenylenebis(3,1-benzoxazin-4-one), 2,2'-m-phenylenebis(3,1-benzoxazin-4-one), 2,2'-(4,4'-diphenylene)bis(3,1-benzoxazin-4-one), 2,2'-(2,6-naphthalene)bis(3,1-benzoxazin-4-one), 2,2'-(1,5-naphthalene)bis(3,1-benzoxazin-4-one), 2,2'-(2-methyl-p-phenylene)bis(3,1-benzoxazin-4-one), 2,2'-(2-nitro-p-phenylene)bis(3,1-benzoxazin-4-one) and 2,2'-(2-chloro-p-phenylene)bis(3,1-benzoxazin-4-one).
Out of these, 2,2'-p-phenylenebis(3,1-benzoxazin-4-one), 2,2'-(4,4'-diphenylene)bis(3,1-benzoxazin-4-one) and 2,2'-(2,6-naphthalene)bis(3,1-benzoxazin-4-one) are preferred. 2,2'-p-phenylenebis(3,1-benzoxazin-4-one) is particularly preferred. The compound is commercially available from Takemoto Yushi Co. , Ltd. under the trade name of CEi-P and can be easily used.

Examples of the cyanoacrylate-based ultraviolet absorbent include 1,3-bis-[(2'-cyano-3',3'-diphenylacryloyl)oxy]-2,2-bis[( 2-cyano-3,3-diphenylacryloyl)oxy]methyl)propane and 1,3-bis-[(2-cyano-3,3-diphenylacryloyl)oxy]benzene.

The amount of the ultraviolet absorbent is preferably 0.01 to 3.0 parts by weight, more preferably 0.02 to 1.0 part by weight, much more preferably 0.05 to 0.8 part by weight based on 100 parts by weight of the copolycarbonate. Within this range, satisfactory weatherability can be provided to a copolycarbonate molded article according to its application.

(bluing agent)

Examples of the bluing agent include the Macrolex Violet B and Macrolex Blue RR of Bayer AG and the Polysinthrene Blue RLS of Clariant International Ltd. The bluing agent is effective in erasing the yellow tinge of the copolycarbonate. Since a copolycarbonate provided with weatherability contains a predetermined amount of an ultraviolet absorbent, a copolycarbonate molded article is apt to be tinged with yellow by "the function and color of the ultraviolet absorbent". To provide natural transparency to a sheet or lens in particular, use of the bluing agent is very effective.

The amount of the bluing agent is preferably 0.05 to 1.5 ppm, more preferably 0.1 to 1.2 ppm based on the copolycarbonate.

An optical lens formed from the copolycarbonate of the present invention preferably has a transmittance of a molded piece at 550 nm of not less than 80 %. The transmittance is more preferably not less than 85 %. When the transmittance is lower than 80 %, it is difficult to use it as an optical lens. The total light transmittance of the optical lens

of the present invention is preferably 80 to 100 %, more preferably 85 to 100 %, much more preferably 87 to 100 %.

The optical lens of the present invention preferably has small optical strain. An optical lens formed from a general bisphenol A type polycarbonate resin has large optical strain. Although there is a case where the optical strain can be reduced by molding conditions, the conditional width is generally very small and it is therefore very difficult to mold the resin. Since the copolycarbonate of the present invention has small optical strain caused by the orientation of the resin and small molding strain, a good optical element can be obtained without setting molding conditions precisely.

The optical lens of the present invention is advantageously used as an aspherical lens as required. Since it is possible to nullify spherical aberration substantially with one aspherical lens, it is not necessary to remove spherical aberration by combining a plurality of spherical lenses, thereby making it possible to reduce the weight and production cost of the lens. Therefore, the aspherical lens is particularly useful as a camera lens.

A coating layer such as an antireflection layer or a hard coat layer may be optionally formed on the surface of the optical lens of the present invention. The antireflection layer may be composed of a single layer or multiple layers and made of either an organic substance or an inorganic substance, preferably an inorganic substance. Specific examples of the inorganic substance include oxides and fluorides such as silicon oxide, aluminum oxide, zirconium oxide, titanium oxide, cerium oxide, magnesium oxide and magnesium fluoride.

Examples

The following examples are provided to further illustrate the present invention. Evaluations were made by the following methods.

(1) Specific viscosity

0.7 g of a polymer was dissolved in 100 ml of methylene chloride, and the resulting solution was measured at 20˚C.

(2) Copolymerization ratio

This was measured by using the JNM-AL400 proton NMR of JEOL Ltd. As shown in Fig. 1, this was obtained from the integral ratio of peaks derived from
9,9-bis(4-(2-hydroxyethoxy)phenyl)fluorene at 3.8 to 4.6 ppm to peaks derived from
9,9-bis(4-(2-hydroxyethoxy)phenyl)fluorene and bis(4-hydroxypheny)sulfide at 6.5 to 7.8 ppm.

(2) Glass transition point (Tg)

A sample prepared by pelletizing a copolycarbonate obtained after the end of polymerization was measured with the 910 DSC of Du Pont.

(4) Refractive index ($n_d$)

The refractive index of a 100 μm-thick film was measured at 25˚C and a wavelength of 589 nm by using the DRM2 Abbe refractometer of ATAGO Co., Ltd. and 1-bromonaphthalene as an intermediate liquid.

(5) $\Delta n$

A 100 μm-thick cast film was cut 7 cm in the casting direction and 1.5 cm in a direction (width direction) orthogonal to the casting direction, the both ends in the longitudinal direction of the film were sandwiched with chucks (chuck interval of 4.5 cm), the film was stretched to 2 times in the casting direction at a temperature of (Tg of copolycarbonate resin+10)˚C, and the phase difference (Re) at 589 nm of the stretched film was measured by using the Ellipsometer M-220 of JASCO Corporation to obtain its orientation birefringence ($\Delta n$) from the following formula.

$$\Delta n = Re/d$$

$\Delta n$: orientation birefringence
Re: phase difference
d: thickness

(6) Phase difference

A 1 mm-thick molded piece was measured with the KOBRA-CCD of Oji Scientific Instruments Co., Ltd.

(7) Optical strain

A molded lens was sandwiched between two polarizing plates to check light leakage from the back of the lens with a crossed Nicols method visually so as to evaluate it based on the following criteria.

◎: almost no leakage
○: slight leakage is seen
△: leakage is seen
X: leakage is marked

(8) Total light transmittance

A 1 mm-thick molded piece was measured with the MDH-300A of Nippon Denshoku Industries Co. Ltd.

(9) Molecular weight retention

After a 1 mm-thick molded piece was left at 85˚C and 85 %RH for 400 hours, its appearance was visually evaluated. The specific viscosity ($\eta_{sp}$) of a solution prepared by dissolving 0.7 g of the molded piece in 100 ml of methylene chloride was measured at 20˚C to obtain its specific viscosity retention (molecular weight retention) after a moist heat test.

$$\Delta\eta_{sp} = (\eta_{sp1}/\eta_{sp0}) \times 100$$

$\Delta\eta_{sp}$ specific viscosity retention
$\eta_{sp1}$: specific viscosity before test
$\eta_{sp0}$: specific viscosity after test

Example 1 (EX-PC1)

21.93 parts by weight of 9,9-bis(4-(2-hydroxyethoxy)phenyl)fluorene (may be referred to as "BPEF" hereinafter), 10.90 parts by weight of bis (4-hydroxyphenyl) sulfide (may be referred to as "TDP" hereinafter), 21.85 parts by weight of diphenyl carbonate, 5.04 x $10^{-5}$ part by weight of sodium hydrogen carbonate and 5.52 x $10^{-3}$ part by weight of tetramethylammonium hydroxide were injected into a 10-liter reactor equipped with a stirrer and a distillation device and heated at 215˚C in a nitrogen atmosphere of 760 Torr for 1 hour under agitation.

Thereafter, the vacuum degree was set to 150 Torr over 15 minutes to carry out a transesterification reaction by maintaining 215˚C and 150 Torr for 20 minutes. Further, the temperature was raised up to 240˚C at a rate of 37.5˚C/hr and kept at that temperature at 150 Torr for 10 minutes. Thereafter, the pressure was reduced to 120 Torr over 10 minutes and kept at that pressure at 240˚C for 70 minutes. Then, the pressure was reduced to 100 Torr over 10 minutes and kept at that pressure at 240˚C for 10 minutes. The pressure was further reduced to 1 Torr or less over 40 minutes to carry out a polymerization reaction at 240˚C and 1 Torr or less for 10 minutes under agitation.

After the end of the reaction, nitrogen was blown into the reactor to increase the pressure, 7.01 x $10^{-4}$ part by weight of tetrabutylphosphonium dodecylbenzenesulfonate was added to deactivate the catalysts. Then, the formed copolycarbonate was pelletized and taken out. The copolycarbonate had a molar ratio of BPEF to TDP as constituent units of 50:50, a specific viscosity of 0.36 and a Tg of 137˚C.

A 100 μm-thick film was molded from the copolycarbonate to measure its refractive index ($n_d$) and orientation birefringence (Δn). The results are shown in Table 1.

Example 2 (EX-PC)

A copolycarbonate was synthetized in the same manner as in Example 1 except that the amount of BPEF was changed to 30.70 parts by weight and the amount of TDP in EX-PC1 was changed to 6.54 parts by weight. The copolycarbonate had a molar ratio of BPEF to TDP of 70:30, a specific viscosity of 0.27 and a Tg of 147˚C.

A 100 μm-thick film was molded from the copolycarbonate to measure its refractive index ($n_d$) and orientation

birefringence (Δn). The results are shown in Table 1.

Example 3 (EX-PC3)

A copolycarbonate was synthetized in the same manner as in Example 1 except that the amount of BPEF was changed to 37.27 parts by weight and the amount of TDP in EX-PC1 was changed to 3.27 parts by weight. The copolycarbonate had a molar ratio of BPEF to TDP of 85:15, a specific viscosity of 0.27 and a Tg of 153˚C.
A 100 μm-thick film was molded from the copolycarbonate to measure its refractive index ($n_d$) and orientation birefringence (Δn). The results are shown in Table 1.

Example 4 (EX-PC4)

A copolycarbonate was synthetized in the same manner as in Example 1 except that the amount of BPEF was changed to 41.66 parts by weight and the amount of TDP in EX-PC1 was changed to 1.08 parts by weight. The copolycarbonate had a molar ratio of BPEF to TDP of 95:5, a specific viscosity of 0.28 and a Tg of 158˚C.
A 100 μm-thick film was molded from the copolycarbonate to measure its refractive index ($n_d$) and orientation birefringence (Δn). The results are shown in Table 1.

Example 5 (EX-PC5)

A copolycarbonate was synthetized in the same manner as in Example 1 except that the amount of BPEF in EX-PC1 was changed to 35.08 parts by weight, TDP was changed to bis(4-hydroxy-3-methylphenyl)sulfide (to be referred to as "HMPS" hereinafter), and the amount of HMPS was 4.92 parts by weight. The copolycarbonate had a molar ratio of BPEF to HMPS of 80:20, a specific viscosity of 0.30 and a Tg of 147˚C.
A 100 μm-thick film was molded from the copolycarbonate to measure its refractive index ($n_d$) and orientation birefringence (Δn). The results are shown in Table 1.

Example 6 (EX-PC6)

21.93 parts by weight of BPEF, 8.72 parts by weight of TDP, 3.78 parts by weight of 9,9-bis(3-methyl-4-hydroxyphenyl)fluorene (to be referred to as "BCF" hereinafter), 21.85 parts by weight of diphenyl carbonate, 5.04 x $10^{-5}$ part by weight of sodium hydrogen carbonate and 5.52 x $10^{-3}$ part by weight of tetramethylammonium hydroxide were injected into a 10-liter reactor equipped with a stirrer and a distillation device and heated at 215˚C in a nitrogen atmosphere of 760 Torr for 1 hour under agitation.
Thereafter, the vacuum degree was set to 150 Torr over 15 minutes to carry out a transesterification reaction by maintaining 215˚C and 150 Torr for 20 minutes. Further, the temperature was raised up to 240˚C at a rate of 37.5˚C/hr and kept at that temperature at 150 Torr for 10 minutes. Thereafter, the pressure was reduced to 120 Torr over 10 minutes and kept at that pressure at 240˚C for 70 minutes. Then, the pressure was reduced to 100 Torr over 10 minutes and kept at that pressure at 240˚C for 10 minutes. The pressure was further reduced to 1 Torr or less over 40 minutes to carry out a polymerization reaction at 240˚C and 1 Torr or less for 10 minutes under agitation.
After the end of the reaction, nitrogen was blown into the reactor to increase the pressure, 7.01 x $10^{-4}$ part by weight of tetrabutylphosphonium dodecylbenzenesulfonate was added to deactivate the catalysts. Then, the formed copolycarbonate was pelletized and taken out. The obtained copolycarbonate had a molar ratio of BPEF to TDP and BCF as constituent units of 50:40:10, a specific viscosity of 0.27 and a Tg of 151˚C.
A 100 μm-thick film was molded from the copolycarbonate to measure its refractive index ($n_d$) and orientation birefringence (Δn). The results are shown in Table 1.

Comparative Example 1 (CEX-PC1)

17.54 parts by weight of BPEF, 6.54 parts by weight of TDP, 6.84 parts by weight of bisphenol A (to be referred to as "BPA" hereinafter), 21.85 parts by weight of diphenyl carbonate, 5.04 x $10^{-5}$ part by weight of sodium hydrogen carbonate and 5.52 x $10^{-3}$ part by weight of tetramethylammonium hydroxide were injected into a 10-liter reactor equipped with a stirrer and a distillation device and heated at 215˚C in a nitrogen atmosphere of 760 Torr for 1 hour under agitation.
Thereafter, the vacuum degree was set to 150 Torr over 15 minutes to carry out a transesterification reaction by maintaining 215˚C and 150 Torr for 20 minutes. Further, the temperature was raised up to 240˚C at a rate of 37.5˚C/hr and kept at that temperature at 150 Torr for 10 minutes. Thereafter, the pressure was reduced to 120 Torr over 10 minutes and kept at that pressure at 240˚C for 70 minutes. Then, the pressure was reduced to 100 Torr over 10 minutes and kept at that pressure at 240˚C for 10 minutes. The pressure was further reduced to 1 Torr or less over 40 minutes

to carry out a polymerization reaction at 240˚C and 1 Torr or less for 10 minutes under agitation. After the end of the reaction, nitrogen was blown into the reactor to increase the pressure, 7.01 x $10^{-4}$ part by weight of tetrabutylphosphonium dodecylbenzenesulfonate was added to deactivate the catalysts. Then, the formed copolycarbonate was pelletized and taken out. The obtained copolycarbonate had a molar ratio of BPEF to TDP and BPA as constituent units of 40:30:30, a specific viscosity of 0.27 and a Tg of 140˚C.

A 100 μm-thick film was molded from the copolycarbonate to measure its refractive index ($n_d$) and orientation birefringence (Δn). The results are shown in Table 1.

Comparative Example 2 (CEX-PC2)

43.85 parts by weight of BPEF, 21.85 parts by weight of diphenyl carbonate, 5.04 x $10^{-5}$ part by weight of sodium hydrogen carbonate and 5.52 x $10^{-3}$ part by weight of tetramethylammonium hydroxide were injected into a 10-liter reactor equipped with a stirrer and a distillation device and heated at 215˚C in a nitrogen atmosphere of 760 Torr for 1 hour under agitation.

Thereafter, the vacuum degree was set to 150 Torr over 15 minutes to carry out a transesterification reaction by maintaining 215˚C and 150 Torr for 20 minutes. Further, the temperature was raised up to 240˚C at a rate of 37.5˚C/hr and kept at that temperature at 150 Torr for 10 minutes. Thereafter, the pressure was reduced to 120 Torr over 10 minutes and kept at that pressure at 240˚C for 70 minutes. Then, the pressure was reduced to 100 Torr over 10 minutes and kept at that pressure at 240˚C for 10 minutes. The pressure was further reduced to 1 Torr or less over 40 minutes to carry out a polymerization reaction at 240˚C and 1 Torr or less for 10 minutes under agitation. After the end of the reaction, nitrogen was blown into the reactor to increase the pressure, and 7.01 x $10^{-4}$ part by weight of tetrabutylphosphonium dodecylbenzenesulfonate was added to deactivate the catalysts. Then, the formed copolycarbonate was pelletized and taken out to obtain a BPEF homopolymer. The obtained polymer had a specific viscosity of 0.37 and a Tg of 161˚C.

A 100 μm-thick film was molded from the copolycarbonate to measure its refractive index ($n_d$) and orientation birefringence (Δn). The results are shown in Table 1.

Comparative Example 3 (CEX-PC3)

A BPA homopolymer was obtained in the same manner as CEX-PC1 except that BPEF of CEX-PC2 was changed to BPA and the amount of BPA was 22.80 parts by weight. The obtained polymer had a specific viscosity of 0.28 and a Tg of 144˚C.

A 100 μm-thick film was molded from the copolycarbonate to measure its refractive index ($n_d$) and orientation birefringence (Δn). The results are shown in Table 1.

Comparative Example 4 (CEX-PC4)

CEX-PC4 having a molar ratio of BPEF to BPA as constituent units of 50:50 was obtained in the same manner as CEX-PC1 except that TDP of CEX-PC1 was changed to BPA and the amount of BPA was 11.40 parts by weight. The obtained polymer had a specific viscosity of 0.30 and a Tg of 150˚C.

A 100 μm-thick film was molded from the copolycarbonate to measure its refractive index ($n_d$) and orientation birefringence (Δn). The results are shown in Table 1.

As for EX-PC1 to EX-PC6, CEX-PC1 and CEX-PC4, an absorption derived from a carbonate bond was observed at around 1,760 $cm^{-1}$ by IR measurement. It was confirmed that these products were random copolymers as only one peak derived from Tg obtained by DSC measurement was seen. It was confirmed from the proton NMR shown in Fig. 1 that EX-PC1 was a copolycarbonate of BPEF and TDP.

Examples 7 to 12 and Comparative Examples 5 to 8

After the produced copolycarbonate was vacuum dried at 120˚C for 24 hours, 0.050 part by weight of bis(2,4-dicumylphenyl)pentaerythritol diphosphite and 0.10 part by weight of pentaerythritol tetrastearate were added to 100 parts by weight of the copolycarbonate, and the resulting mixture was pelletized with a vented 3 0 mm-diameter single-screw extruder.

Thereafter, under molding conditions shown in Table 1, a lens having a thickness of 0.3 mm, a curvature radius of a convex surface of 5 mm, a curvature radius of a concave surface of 4 mm and a diameter of 5 mm was injection molded by using the SE30DU injection molding machine of Sumitomo Heavy Industries, Ltd. Also, a molded piece having a thickness of 1.0 mm, a width of 2.5 cm and a length of 5.0 cm was injection molded by using the N-20C injection molding machine of JSW Co., Ltd.

The above lens was sandwiched between two polarizing plates to check light leakage from the back by a crossed Nicols method visually so as to evaluate its optical strain. The phase difference, total light transmittance and molecular weight retention of the molded piece were measured. The results are shown in Table 1.

The copolycarbonates of Examples 7 to 12 had a Tg within a suitable range, and lenses obtained from these copolycarbonates had excellent heat resistance and processability. Since the copolycarbonates had a high refractive index and small optical strain, they are suitable for use as lenses.

Preferably, the copolycarbonate of the present invention has a Tg of 130 to 160˚C, a refractive index ($n_d$) of 1.630 to 1.65 and a phase difference of 0 to 130 nm.

In contrast to this, the lens of Comparative Example 5 has large optical strain, the lens of Comparative Example 6 has a high Tg and poor processability, the lenses of Comparative Examples 7 and 8 have a low refractive index and large optical strain. Therefore, the application range of these lenses is limited.

Table 1 (1/2)

| | Composition | | | | | | Physical properties | | | |
|---|---|---|---|---|---|---|---|---|---|---|
| | PC resin | BPEF | TDP | HMPS | BCF | BPA | Specific viscosity | Tg | $n_d$ | Δn |
| | | mol% | mol% | mol% | mol% | mol% | - | ˚C | - | - |
| Example 1 | EX-PC1 | 50 | 50 | - | - | - | 0.36 | 137 | 1.641 | 9.3 |
| Example 2 | EX-PC2 | 70 | 30 | - | - | - | 0.27 | 147 | 1.640 | 5.8 |
| Example 3 | EX-PC3 | 85 | 15 | - | - | - | 0.27 | 153 | 1.640 | 0.5 |
| Example 4 | EX-PC4 | 95 | 5 | - | - | - | 0.28 | 158 | 1.639 | 5.0 |
| Example 5 | EX-PC5 | 80 | - | 20 | - | - | 0.30 | 147 | 1.633 | 0.9 |
| Example 6 | EX-PC6 | 50 | 40 | - | 10 | - | 0.27 | 151 | 1.641 | 3.0 |
| Comparative Example 1 | CEX-PCl | 40 | 30 | - | - | 30 | 0.27 | 140 | 1.625 | >10 |
| Comparative Example 2 | CEX-PC2 | 100 | - | - | - | - | 0.37 | 161 | 1.640 | >10 |
| Comparative Example 3 | CEX-PC3 | - | - | - | - | 100 | 0.28 | 144 | 1.589 | >10 |
| Comparative Example 4 | CEX-PC4 | 50 | - | - | - | 50 | 0.30 | 150 | 1.615 | >10 |

Table 1 (2/2)

| | Molding conditions | | | Evaluation results | | | |
|---|---|---|---|---|---|---|---|
| | PC resin | Cylinder temperature | Mold temperature | phase difference | optical strain | total light transmittance | molecular weight retention |
| | - | ˚C | ˚C | nm | - | % | % |
| Example 7 | EX-PC1 | 280 | 100 | 120 | ○ | 87 | 97 |
| Example 8 | EX-PC2 | 300 | 120 | 70 | ○ | 88 | 97 |
| Example 9 | EX-PC3 | 300 | 120 | 25 | ◎ | 88 | 96 |
| Example 10 | EX-PC4 | 300 | 120 | 65 | ○ | 88 | 94 |
| Example 11 | EX-PC5 | 300 | 120 | 50 | ◎ | 88 | 97 |
| Example 12 | EX-PC6 | 300 | 120 | 90 | ○ | 88 | 97 |
| Comparative Example 5 | CEX-PC1 | 280 | 100 | 180 | × | 89 | 97 |

(continued)

| | Molding conditions | | | Evaluation results | | | |
|---|---|---|---|---|---|---|---|
| | PC resin | Cylinder temperature | Mold temperature | phase difference | optical strain | total light transmittance | molecular weight retention |
| | - | ˚C | ˚C | nm | - | % | % |
| Comparative Example 6 | CEX-PC2 | 310 | 130 | 150 | △ | 87 | 90 |
| Comparative Example 7 | CEX-PC3 | 290 | 110 | 400 | × | 89 | 98 |
| Comparative Example 8 | CEX-PC4 | 300 | 120 | 140 | △ | 88 | 97 |

Effect of the Invention

The copolycarbonate of the present invention has a high refractive index ($n_d$) and is suitable for use as an optical lens. The copolycarbonate of the present invention has a small birefringence (phase difference). Since the copolycarbonate of the present invention has a low glass transition temperature (Tg) and therefore the molding temperature can be reduced, it has excellent processability. The copolycarbonate of the present invention has excellent transparency due to its high total light transmittance. The copolycarbonate of the present invention has excellent molecular weight retention.

An optical lens formed from the copolycarbonate of the present invention has a high refractive index ($n_d$), a small birefringence (phase difference) and excellent transparency. The optical lens of the present invention can be produced by injection molding, has high productivity and is inexpensive.

According to the present invention, an aspherical lens having a high refractive index and a low birefringence which is technically difficult to be processed from a glass lens can be easily obtained by injection molding.

Industrial Applicability

The optical lens of the present invention can be used in fields in which an expensive high refractive-index glass lens has been used, such as cameras, telescopes, binoculars and TV projectors.

**Claims**

1. A copolycarbonate having a total content of a unit represented by the following formula (I) and a unit represented by the following formula (II) of not less than 80 mol% based on the total of all the recurring units, the molar ratio of the unit represented by the formula (I) to the unit represented by the formula (II) being in the range of 98:2 to 35:65.

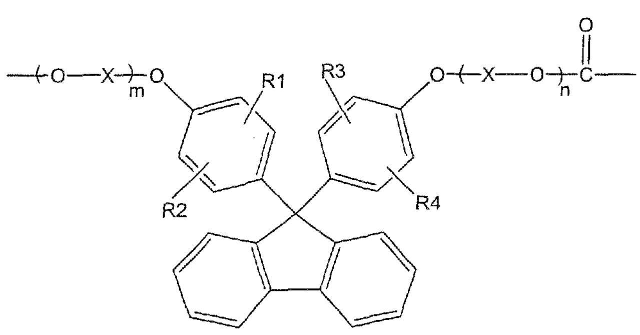

(I)

(wherein each of R1, R2, R3 and R4 is independently a hydrogen atom, alkyl group having 1 to 20 carbon atoms, alkoxyl group having 1 to 20 carbon atoms, cycloalkyl group having 5 to 20 carbon atoms, cycloalkoxyl group having 5 to 20 carbon atoms, aryl group having 6 to 20 carbon atoms or aryloxy group having 6 to 20 carbon atoms.

X is an alkylene group having 2 to 8 carbon atoms, cycloalkylene group having 5 to 12 carbon atoms or arylene group having 6 to 20 carbon atoms. Each of m and n is independently an integer of 1 to 10.)

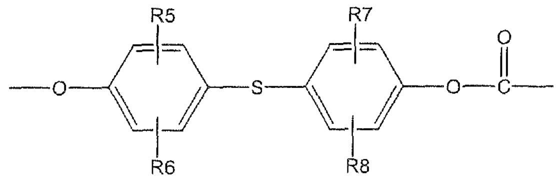

(I I)

(wherein each of R5 , R6, R7 and R8 is independently a hydrogen atom, alkyl group having 1 to 20 carbon atoms, alkoxyl group having 1 to 20 carbon atoms, cycloalkyl group having 5 to 20 carbon atoms, cycloalkoxyl group having 5 to 20 carbon atoms, aryl group having 6 to 20 carbon atoms or aryloxy group having 6 to 20 carbon atoms.)

**2.** The copolycarbonate according to claim 1, wherein in the unit represented by the above formula (II), each of R5, R6, R7 and R8 is independently a hydrogen atom or methyl group.

**3.** The copolycarbonate according to claim 1 or 2, wherein in the unit represented by the above formula (I), each of R1, R2, R3 and R4 is a hydrogen atom, X is an ethylene group, n is 1, and m is 1.

**4.** The copolycarbonate according to any one of claims 1 to 3, wherein the molar ratio of the unit represented by the formula (I) to the unit represented by the formula (II) is in the range of 95:5 to 40:60.

**5.** The copolycarbonate according to any one of claims 1 to 4, wherein the specific viscosity measured at 20˚C of a solution prepared by dissolving 0.7 g of the copolycarbonate in 100 ml of methylene chloride is 0.12 to 0.55.

**6.** The copolycarbonate according to any one of claims 1 to 5 which has a refractive index of 1.61 to 1.66 and a glass transition temperature of 130 to 160˚C.

**7.** An optical lens formed from the copolycarbonate according to any one of claims 1 to 6.

**8.** A method of producing a copolycarbonate by reacting dihydroxy compounds with a carbonate precursor, wherein the dihydroxy compounds are **characterized in that** the total content of a compound represented by the following formula (1) and a compound represented by the following formula (2) is not less than 80 mol% based on the total of all the dihydroxy compounds, and the molar ratio of the compound represented by the formula (1) to the compound represented by the formula (2) is 98:2 to 35:65.

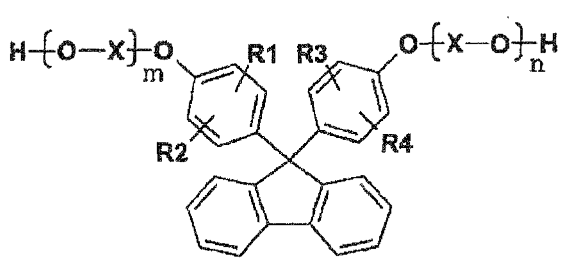

(1)

(wherein each of R1, R2, R3 and R4 is independently a hydrogen atom, alkyl group having 1 to 20 carbon atoms, alkoxyl group having 1 to 20 carbon atoms, cycloalkyl group having 5 to 20 carbon atoms, cycloalkoxyl group having 5 to 20 carbon atoms, aryl group having 6 to 20 carbon atoms or aryloxy group having 6 to 20 carbon atoms. X is an alkylene group having 2 to 8 carbon atoms, cycloalkylene group having 5 to 12 carbon atoms or arylene group having 6 to 20 carbon atoms. Each of m and n is independently an integer of 1 to 10.)

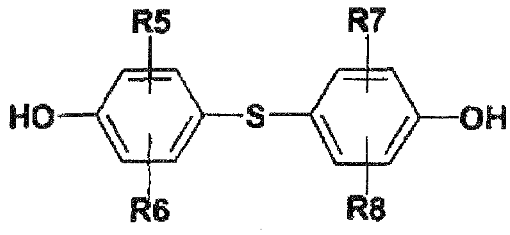

(2)

(wherein each of R5, R6, R7 and R8 is independently a hydrogen atom, alkyl group having 1 to 20 carbon atoms, alkoxyl group having 1 to 20 carbon atoms, cycloalkyl group having 5 to 20 carbon atoms, cycloalkoxyl group having 5 to 20 carbon atoms, aryl group having 6 to 20 carbon atoms or aryloxy group having 6 to 20 carbon atoms.)

**9.** A method of producing an optical lens by injection molding the copolycarbonate of claim 1.

Fig. 1

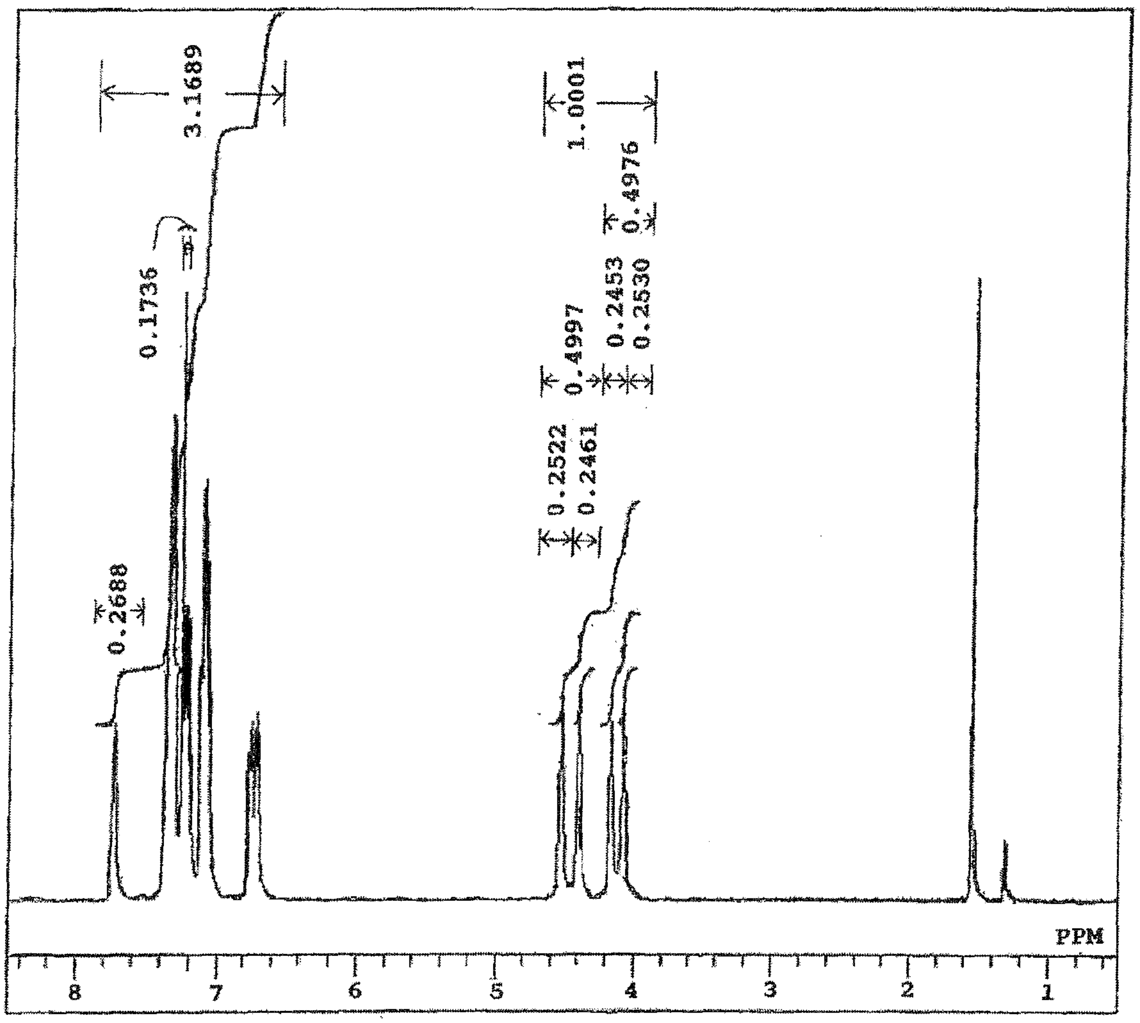
3.1689
0.1736
0.2688
1.0001
0.4976
0.4997
0.2453
0.2530
0.2522
0.2461
PPM
8
7
6
5
4
3
2
1

**INTERNATIONAL SEARCH REPORT**

International application No.
PCT/JP2010/053711

A. CLASSIFICATION OF SUBJECT MATTER
*C08G64/06*(2006.01)i, *G02B1/04*(2006.01)i

According to International Patent Classification (IPC) or to both national classification and IPC

B. FIELDS SEARCHED

Minimum documentation searched (classification system followed by classification symbols)
C08G64/06, G02B1/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)
CAplus(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| A | JP 07-509269 A (The Dow Chemical Co.), 12 October 1995 (12.10.1995), entire text & US 5532331 A & EP 651772 A & WO 1994/002533 A1 | 1-9 |
| A | JP 2000-212271 A (Teijin Ltd.), 02 August 2000 (02.08.2000), entire text (Family: none) | 1-9 |
| A | JP 2007-246629 A (JSR Corp.), 27 September 2007 (27.09.2007), entire text (Family: none) | 1-9 |

☐ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 May, 2010 (12.05.10) | 25 May, 2010 (25.05.10) |
| Name and mailing address of the ISA/ Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 10101786 A
- JP 2005241962 A
- WO 2007142149 A
- JP 2005187661 A